# NEUE EUROPÄISCHE PATENTSCHRIFT

(11) **EP 1 554 604 B2**
(45) Veröffentlichungstag und Bekanntmachung des Hinweises auf die Entscheidung über den Einspruch: **30.09.2009**
(45) Hinweis auf die Patenterteilung: 04.10.2006
(21) Anmeldenummer: 03794674.6
(22) Anmeldetag: 17.07.2003
(51) Int. Cl.: G01S 13/93, G08G 1/16, B60Q 1/52

(54) **VERFAHREN UND EINRICHTUNG ZUR VERHINDERUNG DER KOLLISION VON FAHRZEUGEN**
METHOD AND DEVICE FOR PREVENTING A COLLISION OF VEHICLES
PROCEDE ET DISPOSITIF POUR EMPECHER LA COLLISION DE VEHICULES

(30) Priorität: 23.09.2002 DE 10244205
(43) Veröffentlichungstag der Anmeldung: 20.07.2005
(73) Patentinhaber: ROBERT BOSCH GMBH, 70442 Stuttgart (DE)
(72) Erfinder: KNOOP, Michael, 71638 Ludwigsburg (DE); STAEMPFLE, Martin, 89075 Ulm (DE); OECHSLE, Fred, 71642 Ludwigsburg (DE)
(86) Internationale Anmeldenummer: PCT/DE2003/002406
(87) Internationale Veröffentlichungsnummer: WO 2004/029653

(56) Entgegenhaltungen:
- EP-A- 0 348 691
- EP-A- 0 903 714
- EP-B1- 1 182 089
- DE-A- 4 407 757
- DE-A- 4 423 966
- DE-A- 10 007 501
- DE-A1- 10 024 227
- DE-A1- 10 060 288
- DE-C2- 4 338 244
- DE-T2- 60 016 815
- US-A- 5 410 304

## Beschreibung

Aus DE 197 36 774 A1 der Anmelderin ist ein Verfahren zur Informationsanzeige in einem Kraftfahrzeug bekannt, das eine bildbasierte Fahrspurverfolgung ermöglicht. Dazu ist eine fahrzeugfeste Videokamera vorgesehen, die die vor dem Fahrzeug liegenden Fahrspuren, einschließlich der Verkehrszeichen, aufnimmt. Die von der Videokamera gelieferten Videosignale werden auf regelwidrige Fahrzustände ausgewertet. Bei Erkennung eines regelwidrigen Fahrverhaltens, beispielsweise einer unzulässigen Geschwindigkeitsüberschreitung, oder einem Überholvorgang in einem Straßenabschnitt mit Überholverbot werden Warnsignale für den Fahrer erzeugt.

Auch aus DE 298 02 953 U ist ein elektronisches System zur Erkennung von Verkehrszeichen und deren Anzeige auf einem Display bekannt.

Aus der ebenfalls auf die Anmelderin zurückgehenden DE 299 02 457 U1 ist weiterhin eine Einrichtung zur Umfelderkennung mit einer Kameraeinrichtung zur Generierung von Videosignalen bekannt, die mindestens zwei Kameras mit überlappenden Gesichtsfeldern aufweist. Die Kameras liefern eine stereoskopische Videosequenz an eine Bildverarbeitungseinheit, die mittels dreidimensionaler Mustererkennung und Bildverarbeitung Verkehrszeichen detektiert und klassifiziert. Neben Verkehrszeichen vermag die Einrichtung gleichzeitig auch vorausfahrende bzw. vor dem Fahrzeug stehende Fahrzeuge zu erkennen und, je nach Verkehrssituation, Warnsignale abzugeben, beziehungsweise aktiv in den Betriebszustand des Fahrzeugs einzugreifen. Als derartige aktive Eingriffe werden die Abstandsregelung im Stop and Go oder Kolonnenverkehr vermittels Eingriff in die Brems- und Motorsteuerung des Fahrzeugs oder aber auch die Ansteuerung einer automatischen Lenkung beschrieben.

Aus US 6,049 295 A1 ist ein Verfahren bekannt, das Kollisionen zwischen Fahrzeugen verhindern soll, die eine Kreuzung ohne Verkehrszeichen oder einen schlecht einsehbaren Strassenabschnitt befahren. Dieses Verfahren erfordert eine straßenfeste Einrichtung und fahrzeuggebundene Einrichtungen, die per Funk miteinander in Verbindung stehen.

Aus DE 198 30 547 A1 ist weiter ein Kreuzungswarnsystem bekannt, das ebenfalls auf straßenseitige und fahrzeugseitige Einrichtungen angewiesen ist.

Schließlich offenbart die DE 4 423 966 A1 ein gattungsgemäßes Verfahren.

Die DE 100 60 288 A1 zeigt eine Vorgehensweise, nach der bei erkanntem Abbiegewunsch eine Kollisionswahrscheinlichkeit mit entgegenkommenden Fahrzeugen ermittelt wird. Wird in einer solchen Verkehrssituation eine Kollisionswahrscheinlichkeit erkannt, wird der Fahrer auf diesen Umstand hingewiesen oder alternativ ein Bremseingriff vorgenommen. Ferner wird in diesem Dokument ein Kreuzungsassistent beschrieben, bei welchem mit Hilfe von Fahrzeugumfeldsensoren Verkehrszeichen erkannt und dem Fahrer durch Warnung oder Bremseingriffe in einer solchen Kreuzungssituation geholfen wird.

Die DE 43 38 244 A1 beschreibt eine Vorgehensweise, nach der aufgrund von aktuellen Fahrdaten wie Bremspedalbetätigung, Gaspedalbetätigung, Ampelzustand, etc. ermittelt wird, ob sich das Fahrzeug in einer Gefahr befindet. Ist dies der Fall, wird der Fahrerzustand, dass heißt die Fahreraufmerksamkeit, dahingehend überprüft, ob davon ausgegangen werden kann, dass der Fahrer die Gefährlichkeit der Situation erkannt hat. Ist dies nicht der Fall, werden Maßnahmen zur Gefahrenabwendung durchgeführt.

### Vorteile der Erfindung

Die vorliegende Erfindung befasst sich mit vorteilhaften Weiterentwicklungen des bekannten Systems der Anmelderin, die dazu beitragen, besonders häufige Unfälle infolge von Vorfahrtverletzungen und Fahrfehlern im Abbiegeverkehr vermeiden zu helfen. Sie geht dabei von der Erkenntnis aus, dass durch eine fahrzeugautonome Erkennung von Verkehrszeichen und Ampelsignalen, die fahrzeugautonome Erkennung von Fremdfahrzeugen und deren Bewegungsparametern, sowie die Berücksichtigung der Bewegungsparameter des eigenen Fahrzeugs ein Vorfahrtverletzungsmaß und ein Kollisionsgefährdungsmaß beziehungsweise ein Aufmerksamkeitsmaß und ein Kollisionsgefärdungsmaß ermittelbar sind, aus denen wiederum eine Gefährdungsstufe ableitbar ist. In Abhängigkeit von der abgeleiteten Gefährdungsstufe können dann in vorteilhafter Weise Gegenmassnahmen zur Vermeidung einer drohenden Kollision ergriffen werden.
So kann bei einer vergleichsweise geringen Gefährdung der Fahrer durch optische und/oder akustische Signale auf die Gefährdungssituation aufmerksam gemacht werden.

In einer weiteren Eskalationsstufe kann die Bremseinrichtung des Fahrzeugs durch Anlegen der Bremsbeläge an die Bremsscheiben und Bremstrommeln (prefill) und gegebenenfalls durch die Anpassung der Schwellwerte eines Bremsassistenten auf ihren bevorstehenden Einsatz vorbereitet werden.

Weiterhin kann die Aufmerksamkeit des Fahrers durch die Abgabe haptischer Signale, wie beispielsweise eine Warnbremsung und/oder eine Drosselung des Motors weiter erhöht werden.
Über Lenkung und/oder Bremse kann die Fahrzeugbewegung beeinflusst werden.
Weiterhin können irreversible Rückhaltesysteme, wie Gurtstraffer und Airbags durch Anpassung veränderbarer Schwellwerte auf ihren bevorstehenden Einsatz vorbereitet werden.

Schließlich können irreversible Rückhaltesysteme zum Schutz der Fahrzeuginsassen ausgelöst werden.

### Zeichnung

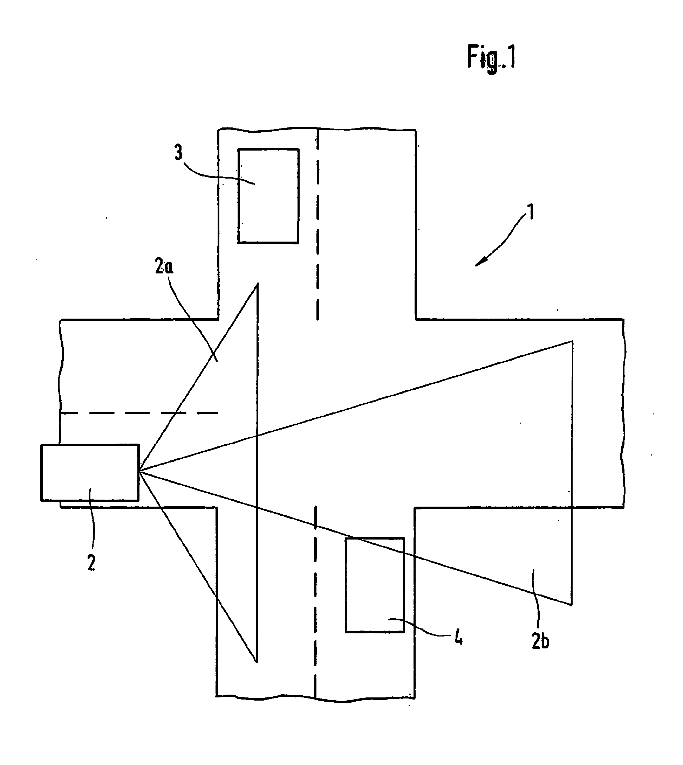

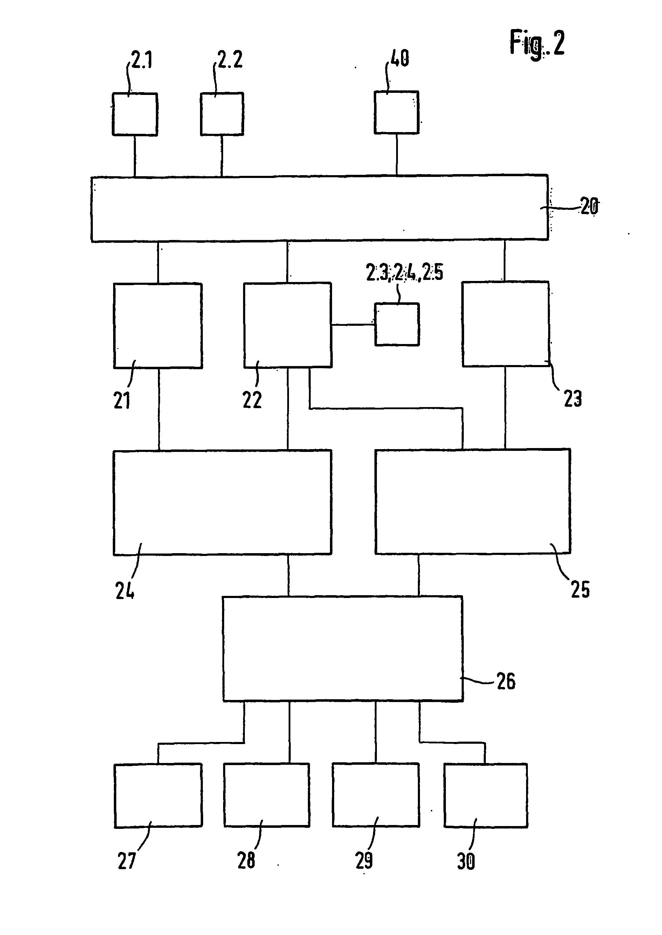

Das erfindungsgemäße Verfahren und die erfindungsgemässe Einrichtung werden nun anhand der Ausführungsbeispiele in der Zeichnung erläutert. Es zeigen Fig.1 eine Verkehrssituation an einer Kreuzung, Fig.2 ein erstes Blockdiagramm zur Erläuterung der Kollisionsvermeidung im Kreuzungsverkehr,

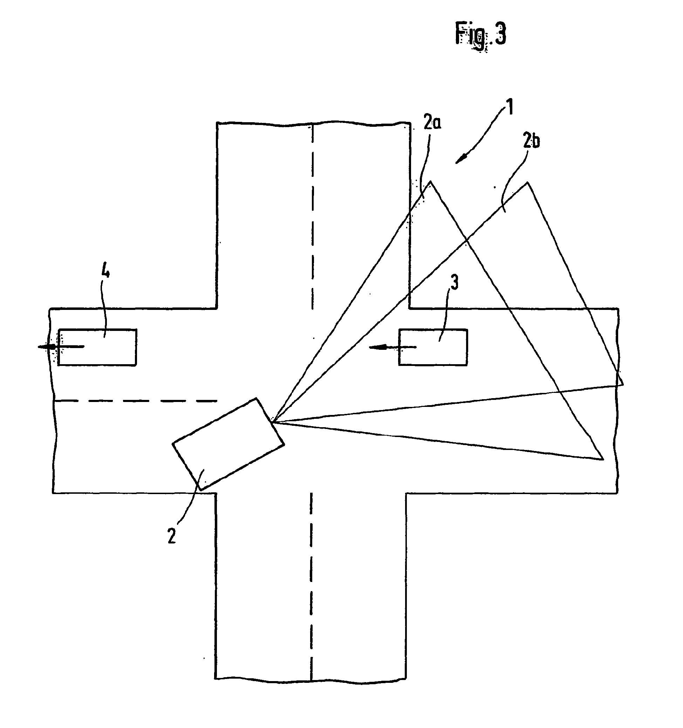

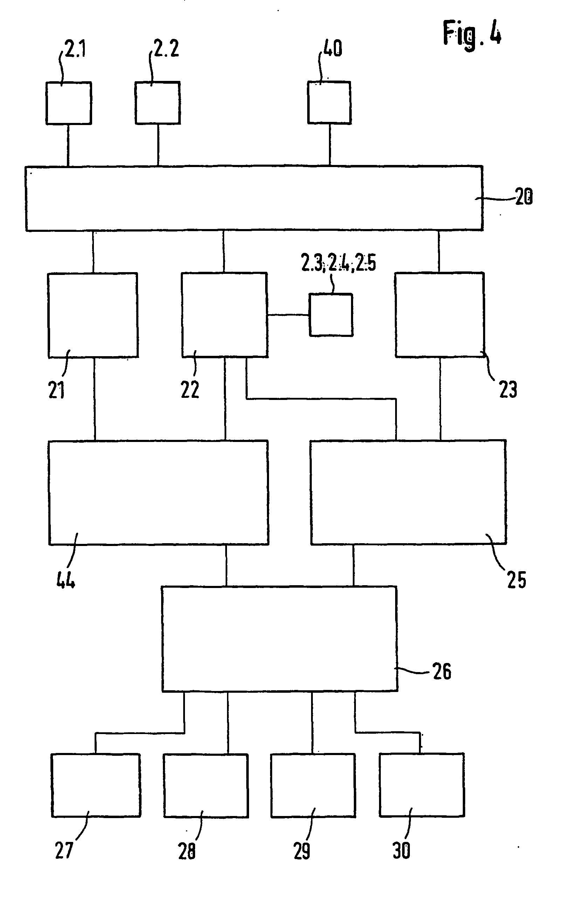

Fig.3 eine Verkehrssituation mit Abbiegeverkehr, Fig.4 ein zweites Blockdiagramm zur Erläuterung der Kollisionsvermeidung im Abbiegeverkehr.

### Beschreibung der Ausführungsbeispiele

Ein erstes Ausführungsbeispiel der Erfindung wird erläutert anhand von Fig.1 und Fig.2, auf welche Weise eine Kollision in dem Bereich einer Kreuzung vermieden werden kann. Fig.1 zeigt eine Verkehrssituation an einer schematisch dargestellten Kreuzung 1. An dieser Kreuzung 1 treffen zwei je zwei Fahrspuren umfassende Strassen aufeinander.
Auf der in Ost-West-Richtung verlaufenden Strasse nähert sich ein erstes Fahrzeug 2 (Egofahrzeug) der Kreuzung 1. Auf der in Nord-Süd-Richtung verlaufenden Strasse nähern sich ein zweites Fahrzeug 3 sowie ein drittes Fahrzeug 4 im Begegnungsverkehr der Kreuzung 1. An dem Fahrzeug 2 ist die erfindungsgemässe Lösung verwirklicht. Das Fahrzeug 2 ist dazu mit einer Vielzahl von Sensorsystemen ausgerüstet. So umfasst das Fahrzeug 2 mindestens ein fahrzeugfestes Videosystem 2.1 mit Erfassungsbereich 2a. Weiterhin kann zusätzlich ein fahrzeugfestes Radarsystem 2.2 mit Erfassungsbereich 2b vorgesehen sein. Die Erfassungsbereiche 2a, 2b erstrecken sich dabei unterschiedlich weit in Fahrtrichtung des Fahrzeugs 2. Das Videosystem 2.1 ist zur Erfassung des Nahbereichs, das Radarsystem 2.2 zur Erfassung eines weiter entfernt liegenden Bereichs vorgesehen. Alternativ oder zusätzlich können auch noch Infrarot- und Lidarsysteme vorgesehen sein, die hier nicht mit eigenen Bezugsziffern versehen sind. Das Fahrzeug 2 umfasst darüber hinaus weitere Sensorsysteme wie einen Raddrehzahlsensor 2.3, einen Gierratensensor 2.4, sowie einen Lenkwinkelsensor 2.5, wie sie auch schon bereits von herkömmlichen ABS- und ASR-Systemen bekannt sind.

Fig.2 zeigt ein Blockdiagramm zur Erläuterung der Kollisionsvermeidung im Kreuzungsverkehr. Die Umfeldsensorik bestehend aus dem Videosystem 2.1 und dem Radarsystem 2.2 und ist mit einem Funktionsmodul 20 verbunden, das die Ausgangssignale dieser vorgenannten Systeme verarbeitet. Das Funktionsmodul 20 ist mit einem weiteren Funktionsmodul 21 verbunden, dem die Ausgangssignale des Funktionsmoduls 20 zugeführt werden und das diese Ausgangssignale zwecks Erkennung der Fahrspur und von Verkehrszeichen auswertet. Weiterhin ist das Funktionsmodul 20 mit einem Funktionsmodul 22 verbunden, dem einerseits die Ausgangssignale des Funktionsmoduls 20 und andererseits die Ausgangssignale der weiteren Sensoren, also des Raddrehzahlsensors 2.3, des Gierratensensors 2.4 und des Lenkwinkelsensors 2.5 zugeführt werden. Das Funktionsmodul 22 dient der Erkennung der Bewegung des eigenen Fahrzeugs 2 und der Erkennung des Fahrerwunsches. Schließlich ist das Funktionsmodul 20 mit einem Funktionsmodul 23 verbunden, das aus den Ausgangssignalen des Funktionsmoduls 20 Informationen über den Querverkehr gewinnt. Die Funktionsmodule 21 und 22 sind ausgangsseitig mit einem weiteren Funktionsmodul 24 verbunden, das der Ermittlung eines Vorfahrtmissachtungsmaßes dient. Weiterhin ist das Funktionsmodul 22 zusammen mit dem Funktionsmodul 23 mit einem weiteren Funktionsmodul 25 verbunden, das der Ermittlung eines Kollisionsgefährdungsmaßes dient. Die Funktionsmodule 24 und 25 wiederum sind mit einem Funktionsmodul 26 verbunden, das der Ermittlung einer Gefährdungsstufe dient. Ausgangsseitig ist das Funktionsmodul 26 mit mehreren Funktionsmodulen 27, 28, 29, 30 verbunden. Dabei dient das Funktionsmodul 27 der optischen, akustischen, haptischen Signalisierung. Das Funktionsmodul 28 steuert Rückhaltesysteme an. Das Funktionsmodul 29 beeinflusst die Motorsteuerung. Das Funktionsmodul 30 schliesslich wirkt auf das Bremssystem ein.

Im Folgenden wird das Verfahren zur Kollisionsverhinderung im Kreuzungsbereich detailliert beschrieben. Bei Annäherung an die Kreuzung 1 erfasst das Videosystem 2.1 des Fahrzeugs 2 Verkehrszeichen und Lichtsignale von eventuell vorhandenen Ampelanlagen. Zusätzlich werden der Verlauf des Fahrbahnrandes, und, soweit entsprechende Markierungen oder vergleichbare Abgrenzungen vorhanden sind, auch der Verlauf der Fahrspur oder der Fahrspuren erfasst. Die Ausgangssignale des Videosystems 2.1 werden in dem Funktionsmodul 20 verarbeitet und in dem Funktionsmodul 21 ausgewertet. Durch die Auswertung der Ausgangssignale des Videosystems 2.1 wird erkannt, wie und auf welcher Fahrspur sich das Fahrzeug 2 der Kreuzung 1 nähert, welche Verkehrsvorschriften die gegebenenfalls vorhandenen Verkehrszeichen vorschreiben und welche Signalstellung die Ampelanlage aufweist. Gibt es auf der in Nord-Süd-Richtung verlaufenden Straße Querverkehr, wie in Fig.1 durch das zweite Fahrzeug 3 und das dritte Fahrzeug 4 angedeutet, werden diese Fahrzeuge 3, 4 ebenfalls von dem Videosystem 2.1 und einem gegebenenfalls zusätzlich vorgesehenen Radarsystem 2.2 erfasst. Die Ausgangssignale der genannten Systeme werden von dem Funktionsmodul 20 verarbeitet und von dem Funktionsmodul 23 ausgewertet. Neben der Anwesenheit derartiger Fahrzeuge 3, 4 im Querverkehr werden zusätzlich auch Bewegungsparameter dieser Fahrzeuge wie insbesondere deren Geschwindigkeit, ihre Beschleunigung sowie gegebenenfalls zusätzliche translatorische und rotatorische Bewegungsgrößen erfasst. Mit diesen Messdaten ist es dem Fahrzeug 2 möglich, das zukünftige Fahrverhalten der Fahrzeuge 3, 4 mit großer Zuverlässigkeit vorauszuschätzen. Schließlich wird, mit Hilfe weiterer bordeigener Sensoren, wie Raddrehzahlsensor 2.3, Gierratensensor 2.4, Lenkwinkelsensor 2.5 sowie dem Funktionsmodul 22 auch der Bewegungszustand des eigenen Fahrzeugs 2 und der Wunsch des Fahrers ermittelt. Beispielsweise kann ein Abbiegewunsch anhand der Stellung des vom Fahrer zuvor betätigten Fahrtrichtungsanzeigers oder auch anhand der prognostizierten Fahrzeugbewegung im Verhältnis zum Fahrspurverlauf erkannt werden. Dies erweist sich deshalb als sinnvoll, weil sich an durch eine Verkehrsampel geregelten Kreuzungen manchmal mehrere Fahrtrichtungen eine Fahrspur teilen, die Signale für diese verschiedenen Richtungen aber unterschiedlich sein können. Zum Beispiel kann die Ampel grün für Rechtsabbieger und rot für andere Fahrtrichtungen anzeigen. Das Funktionsmodul 21 ermittelt aus den Ausgangssignalen des Funktionsmoduls 20, ob sich das der Kreuzung 1 nähernde eigene Fahrzeug 2 vorfahrtsberechtigt ist oder nicht. Stellt sich dabei beispielsweise heraus, dass das eigene Fahrzeug 2 nicht vorfahrtsberechtigt ist, so wird in dem Funktionsmodul 24 aus den Ausgangssignalen der Funktionsmodule 21 und 22 ein Vorfahrtverletzungsmaß ermittelt. Dieses Vorfahrtverletzungsmaß wird aus den Bewegungsdaten des eigenen Fahrzeugs 2 wie Annäherungsgeschwindigkeit und Beschleunigung sowie Abstand des Fahrzeugs 2 zur Kreuzung 1 ermittelt. Dabei werden zusätzlich auch die Reaktionen des Fahrers wie ein Einschlagen des Lenkrads, Betätigung des Fahr- oder Bremspedals und dergleichen berücksichtigt. Wird außerdem die Anwesenheit von Querverkehr (Fahrzeuge 3, 4) im Bereich der Kreuzung 1 erkannt (Funktionsmodul 23), so wird aus den Bewegungsdaten des eigenen Fahrzeugs 2 und der fremden Fahrzeuge 3, 4, also aus den Ausgangssignalen der Funktionsmodule 22, 23 in dem Funktionsmodul 25 ein Kollisionsgefährdungsmaß ermittelt. Dieses Kollisionsgefährdungsmaß ist praktisch ein Maß für die Wahrscheinlichkeit, dass es zu einer Kollision zwischen dem eigenen Fahrzeug 2 und einem fremden Fahrzeug 3,4 kommt, Dabei werden zu jedem Berechnungszeitpunkt die Abstände zwischen dem eigenen Fahrzeug 2 und fremden Fahrzeugen 3, 4 sowie Bewegungsgrößen aus Messwerten bestimmt. Mit Hilfe dieser Daten werden Bewegungstrajektorien der beteiligten Fahrzeuge 2, 3, 4 prädiziert. Dabei wird insbesondere berücksichtigt, dass die Fahrzeuge 2,3,4 verschiedene Bewegungsfreiheitsgrade haben können. Das heißt, dass sie beispielsweise in Längs- und/oder Querrichtung beschleunigt werden können. Im Rahmen von angenommenen Komfortgrenzen, das heißt für Fahrzeuginsassen noch akzeptablen Grenzwerten, geht man dabei von Beschleunigungswerten von bis zu 2,5 msec-2 in Längsrichtung und bis zu etwa 5msec-2 in Querrichtung aus. Dadurch nimmt die Größe des Gebietes, in dem sich die beteiligten Fahrzeuge an einem zukünftigen Zeitpunkt aufhalten können, mit der Prädiktionszeit zu. Ein besonders zweckmäßiges Verfahren für die Berechnung des Kollisionsgefährdungsmaßes vergleicht die prozentuale Überdeckung der zukünftigen Aufenthaltsgebiete der beteiligten Fahrzeuge. Bei einem weiteren vorteilhaften Verfahren für die Ermittlung des Kollisionsgefährdungsmaßes werden mögliche Bewegungstrajektorien des eigenen Fahrzeugs 2, die in das Aufenthaltsgebiet eines fremden Fahrzeugs 3, 4 fallen, eliminiert. Durch das Kollisionsgefährdungsmaß werden dann zum einen die Anzahl der noch verbleibenden Trajektorien und zusätzlich die für jedes potenzielle Fahrmanöver aufzubringende Beschleunigung bewertet. Je größer diese Beschleunigung ist, desto größer ist die Gefahr und damit das Kollisionsgefährdungsmaß. Wie oben schon beschrieben wird auch das Vorfahrtverletzungsmaß nach vergleichbaren Gesichtspunkten ermittelt. Dabei ist die zu betrachtende Situation jedoch einfacher, da es sich bei einem Verkehrszeichen und/oder einer Ampelanlage um ein ortsfestes Objekt handelt, dessen räumliche Ausdehnung allenfalls noch die Haltelinie umfasst.

Mit Hilfe eines vorgebbaren Regelwerks wird aus dem Kollisionsgefährdungsmaß und dem Vorfahrtverletzungsmaß in dem Funktionsmodul 26 eine Gefährdungsstufe für das eigene Fahrzeug 2 ermittelt. Einer bestimmten Gefährdungsstufe sind Gegenmaßnahmen zugeordnet, die von den Funktionsmodulen 27, 28, 29, 30 ausgeführt werden. Beispielsweise sei ein Vorfahrtverletzungsmaß größer als ein vorgebbarer Wert 1, nämlich ein Wert 2 erreicht. Gleichzeitig habe das Kollisionsgefährdungsmaß einen Wert größer als einen vorgebbaren Wert 3 erreicht. Diese Kombination von Vorfahrtverletzungsmaß und Kollisionsgefährdungsmaß wird unter die Gefährdungsstufe A subsumiert. Als Reaktion auf die Feststellung der Gefährdungsstufe A ist in diesem Ausführungsbeispiel der Erfindung eine Warnung des Fahrers vor einer drohenden Kollision vorgesehen. Eine derartige Warnung wird von dem Funktionsmodul 27 bewirkt. Zur Warnung des Fahrers vor einer Vorfahrtverletzung und einer dadurch hervorgerufenen Kollisionsgefahr stehen dabei verschiedene Wahrnehmungskanäle zur Verfügung. Der Fahrer kann einerseits durch ein akustisches Signal wie beispielsweise einen Signalton oder durch eine künstliche Stimme gewarnt werden. Weiterhin kann er auch durch ein optisches Signal wie beispielsweise eine Warnlampe oder die Anzeige des kritischen Verkehrszeichens auf einem Display, insbesondere auch auf einem Head-up-Display, eine Warnung erhalten. Schließlich kann der Fahrer auch durch ein haptisches Signal wie beispielsweise ein Vibrieren der Fahrzeugpedale oder der Lenksäule gewarnt werden.

Abgesehen von der Warnung des Fahrers besteht die Möglichkeit, das Fahrzeug 2 frühzeitig auf eine drohende Notsituation vorzubereiten. So kann beispielsweise bei der Gefährdungsstufe B ein Bremsvorgang durch Anlegen der Bremsbacken (prefill) und/oder durch eine Modifikation von Schwellwerten eines Bremsassistenten vorbereitet werden. Zuständig dafür ist das Funktionsmodul 30.

Bei der Gefährdungsstufe C werden durch das Funktionsmodul 28 Auslöseschwellwerte von Rückhaltesystemen wie Airbag und Gurtstraffer im Sinne einer größeren Empfindlichkeit modifiziert.

Bei der Gefährdungsstufe D erfolgt durch das Funktionsmodul 27 ein Eingriff in die Motorsteuerung, um das Antriebsmoment des Motors zu reduzieren.

Bei der Gefährdungsstufe E wird über das Funktionsmodul 30 in die Bremssteuerung eingegriffen und zunächst eine Warnbremsung ausgelöst, um die Reaktionsbereitschaft des Fahrers auf einen Bremsvorgang zu konzentrieren. Als positiver Nebeneffekt wird dem Fahrzeug dabei schon ein Teil seiner Bewegungsenergie entzogen.

Bei der Gefährdungsstufe F werden unter Einschaltung des Funktionsmoduls 28 reversible Rückhaltesysteme wie beispielsweise Gurtstraffer ausgelöst.

Schließlich werden bei der Gefährdungsstufe G Maßnahmen ergriffen, die die Fahrzeugbewegung selbst massiv beeinflussen. Wenn ein Fahrer beispielsweise die Geschwindigkeit bei Annäherung an ein Stoppschild oder an eine auf rot geschaltete Ampel nicht reduziert, wird durch Mitwirkung der Funktionsmodule 29 und 30 das Fahrzeug stark abgebremst oder sogar zum Stillstand gebracht. Dies gilt insbesondere dann, wenn sich vorfahrtsberechtigter Querverkehr auf Kollisionskurs mit dem eigenen Fahrzeug 2 befindet.
Es liegt im Rahmen der Erfindung, auch vereinfachte Ausführungsbeispiele vorzusehen. So kann beispielsweise eine geringere Anzahl von Gefährdungsstufen definiert werden.

Auch können Art und Anzahl der Reaktionen auf eine Gefährdungsstufe verringert werden. Beispielsweise kann sich die Reaktion lediglich auf eine Warnung des Fahrers, auf vorbereitende Maßnahmen oder einen unmittelbaren Eingriff oder eine beliebige Kombination davon beschränken.

Anhand von Fig.3 und Fig.4 wird ein zweites Ausführungsbeispiel der Erfindung erläutert, bei dem die Vermeidung einer Kollision im Begegnungsverkehr im Vordergrund steht.

Fig.3 zeigt eine Verkehrssituation an einer schematisch dargestellten Kreuzung 1. An dieser Kreuzung 1 treffen zwei je zwei Fahrspuren umfassende Strassen aufeinander.
Auf der rechten Fahrspur der in Ost-West-Richtung verlaufenden Strasse hat sich ein erstes Fahrzeug 2 (Egofahrzeug) der Kreuzung 1 genähert und will über die Gegenfahrbahn nach links abbiegen, um die Fahrt auf der in Nord-Süd-Richtung verlaufenden Strasse fortzusetzen. Auf der linken Fahrspur der in Ost-West-Richtung verlaufenden Strasse bewegen sich ein zweites Fahrzeug 3 sowie ein drittes Fahrzeug 4. Während das Fahrzeug 4 die Kreuzung 1 bereits wieder verlassen hat, nähert sich das Fahrzeug 3 im Begegnungsverkehr zu Fahrzeug 2 der Kreuzung 1. An dem Fahrzeug 2 ist die erfindungsgemässe Lösung verwirklicht. Das Fahrzeug 2 ist dazu mit einer Vielzahl von Sensorsystemen ausgerüstet. So umfasst das Fahrzeug 2 zunächst ein fahrzeugfestes Videosystem 2.1 mit Erfassungsbereich 2a und ein fahrzeugfestes Radarsystem 2.2 mit Erfassungsbereich 2b. Die Erfassungsbereiche 2a, 2b erstrecken sich dabei unterschiedlich weit in Fahrtrichtung des Fahrzeugs 2. Das Videosystem 2.1 ist zur Erfassung des Nahbereichs, das Radarsystem 2.2 zur Erfassung eines weiter entfernt liegenden Bereichs vorgesehen. Alternativ oder zusätzlich können auch noch Infrarot- und Lidarsysteme vorgesehen sein, die hier nicht mit eigenen Bezugsziffern versehen sind. Das Fahrzeug 2 umfasst darüber hinaus weitere Sensorsysteme wie einen Raddrehzahlsensor 2.3, einen Gierratensensor 2.4, sowie einen Lenkwinkelsensor 2.5, wie sie auch schon bereits von herkömmlichen ABS- und ASR-Systemen bekannt sind.

Fig.4 zeigt ein Blockdiagramm zur Erläuterung der Kollisionsvermeidung im Abbiegeverkehr. Die Umfeldsensorik bestehend aus dem Videosystem 2.1 und dem Radarsystem 2.2 und ist mit einem Funktionsmodul 20 verbunden, das die Ausgangssignale dieser vorgenannten Systeme verarbeitet. Das Funktionsmodul 20 ist mit einem weiteren Funktionsmodul 21 verbunden, dem die Ausgangssignale des Funktionsmoduls 20 zugeführt werden und das diese Ausgangssignale zwecks Erkennung der Fahrspur und von Verkehrszeichen auswertet. Weiterhin ist das Funktionsmodul 20 mit einem Funktionsmodul 22 verbunden, dem einerseits die Ausgangssignale des Funktionsmoduls 20 und andererseits die Ausgangssignale der weiteren Sensoren, also des Raddrehzahlsensors 2.3, des Gierratensensors 2.4 und des Lenkwinkelsensors 2.5 zugeführt werden. Das Funktionsmodul 22 dient der Erkennung der Bewegung des eigenen Fahrzeugs 2 und der Erkennung des Fahrerwunsches. Schließlich ist das Funktionsmodul 20 mit einem Funktionsmodul 23 verbunden, das aus den Ausgangssignalen des Funktionsmoduls 20 Informationen über den Gegenverkehr gewinnt. Die Funktionsmodule 21 und 22 sind ausgangsseitig mit einem weiteren Funktionsmodul 44 verbunden, das der Ermittlung eines Aufmerksamkeitsmaßes A dient. Weiterhin ist das Funktionsmodul 22 zusammen mit dem Funktionsmodul 23 mit einem weiteren Funktionsmodul 25 verbunden, das der Ermittlung eines Kollisionsgefährdungsmaßes dient. Die Funktionsmodule 24 und 25 wiederum sind mit einem Funktionsmodul 26 verbunden, das der Ermittlung einer Gefährdungsstufe dient. Ausgangsseitig ist das Funktionsmodul 26 mit mehreren Funktionsmodulen 27, 28, 29, 30 verbunden. Dabei dient das Funktionsmodul 27 der optischen, akustischen, haptischen Signalisierung. Das Funktionsmodul 28 steuert Rückhaltesysteme an. Das Funktionsmodul 29 beeinflusst die Motorsteuerung. Das Funktionsmodul 30 schließlich wirkt auf das Bremssystem des Fahrzeugs 2 ein.

Im Folgenden wird das Verfahren zur Kollisionsverhinderung im Abbiegeverkehr detailliert beschrieben. Bei Annäherung an die Kreuzung 1 erfasst das Videosystem 2.1 des Fahrzeugs 2 Verkehrszeichen und Lichtsignale von eventuell vorhandenen Ampelanlagen. Zusätzlich werden der Verlauf des Fahrbahnrandes, und, soweit entsprechende Markierungen oder vergleichbare Abgrenzungen vorhanden sind, auch der Verlauf der Fahrspur oder der Fahrspuren erfasst. Die Ausgangssignale des Videosystems 2.1 werden in dem Funktionsmodul 20 verarbeitet und in dem Funktionsmodul 21 ausgewertet. Durch die Auswertung der Ausgangssignale des Videosystems 2.1 wird erkannt, wie und auf welcher Fahrspur sich das Fahrzeug 2 der Kreuzung 1 nähert, welche Verkehrsvorschriften die gegebenenfalls vorhandenen Verkehrszeichen vorschreiben und welche Signalstellung die Ampelanlage aufweist. Gibt es auf der in Ost-West-Richtung verlaufenden Strasse Gegenverkehr, wie in Fig.3 durch das zweite Fahrzeug 3 und das dritte Fahrzeug 4 angedeutet, werden diese Fahrzeuge 3, 4 ebenfalls von dem Videosystem 2.1 und dem Radarsystem 2.2 des Fahrzeugs 2 erfasst, sofern sie sich in den Erfassungsbereichen 2a, 2b befinden. In Fig. 3 trifft das für das zweite Fahrzeug 3 zu. Das dritte Fahrzeug 4 befindet sich bereits außerhalb der Erfassungsbereiche 2a, 2b und kann daher von den bordeigenen Video- und Radarsystemen 2.1, 2.2 des Fahrzeugs 2 nicht mehr erfasst werden. Dies ist aber ohnehin nicht erforderlich, da sich das Fahrzeug 4 bereits in Gegenrichtung von der Kreuzung 1 entfernt hat und zwischen den Fahrzeugen 2, 3 keinerlei Kollisionsgefahr mehr besteht. Die Ausgangssignale der genannten Systeme werden von dem Funktionsmodul 20 verarbeitet und von dem Funktionsmodul 23 ausgewertet. Neben der Anwesenheit eines derartigen Fahrzeugs 3 im Begegnungsverkehr werden zusätzlich auch Bewegungsparameter dieses Fahrzeugs, wie insbesondere dessen Geschwindigkeit, seine Beschleunigung, sowie gegebenenfalls zusätzliche translatorische und rotatorische Bewegungsgrößen erfasst. Mit diesen Messdaten ist es dem Fahrzeug 2 möglich, das zukünftige Fahrverhalten des Fahrzeugs 3 mit großer Zuverlässigkeit vorauszuschätzen. Schließlich wird mit Hilfe weiterer bordeigener Sensoren wie Raddrehzahlsensor 2.3, Gierratensensor 2.4, Lenkwinkelsensor 2.5 sowie dem Funktionsmodul 22 auch der Bewegungszustand des eigenen Fahrzeugs 2 und der Wunsch des Fahrers ermittelt. Beispielsweise kann ein Abbiegewunsch anhand der Stellung des vom Fahrer zuvor betätigten Fahrtrichtungsanzeigers oder auch anhand der prognostizierten Fahrzeugbewegung im Verhältnis zum erfassten Fahrspurverlauf erkannt werden.

Wird aufgrund der von den Sensoren abgegebenen Ausgangssignale ein Abbiegevorgang nach links über die Gegenfahrspur hinweg erkannt und dabei zusätzlich das sich im Begegnungsverkehr nähernde Fahrzeug 3 detektiert, so wird in dem Funktionsmodul 25 aus den Ausgangssignalen der Funktionsmodule 22 und 23 ein Kollisionsgefährdungsmaß abgeleitet. Dabei werden insbesondere der Abstand zwischen den beiden Fahrzeugen 2 und 3, ihre Geschwindigkeiten und Beschleunigungen berücksichtigt. Aus der Fahrerreaktion, wie Bremsen oder Beschleunigen und der Information über den Verlauf der eigenen Fahrspur sowie den Verlauf der Vorfahrtstrasse wird ein Aufmerksamkeitsmaß A ermittelt, das praktisch ein Maß für die Reaktionsfähigkeit des Fahrers des Fahrzeugs 2 in einer derartigen Abbiegesituation darstellt. Dieses Aufmerksamkeitsmaß wird in dem Funktionsmodul 44 aus den Ausgangssignalen der Funktionsmodule 21 und 22 ermittelt. Das Aufmerksamkeitsmaß gibt an, ob der Fahrer auf eine sich ändernde Situation reagiert hat. Wenn beispielsweise bei einem Abbiegevorgang nach links über die Gegenfahrbahn Gegenverkehr auftaucht, kann der Fahrer des eigenen Fahrzeugs 2 die dadurch entstehende Gefahr erkennen und das Fahrzeug 2 durch das Wegnehmen von Gas und/oder die Betätigung des Bremspedals abbremsen. Zusätzlich kann der Fahrer auch noch den Lenkungseinschlag zurücknehmen. So könnte das Fahrzeug 2 gefahrlos in die Kreuzung 1 einfahren, obwohl die Einrichtung eine Kollisionsgefahr erkannt hat. Bei der zuvor beschriebenen Situation ist das Aufmerksamkeitsmaß groß, weil sich die Reaktionsforderung der Einrichtung nach einer Reduzierung der Fahrgeschwindigkeit und/oder einem Ausweichmanöver weitgehend mit der tatsächlichen Reaktion des Fahrers deckt. Die Reaktionsforderung der Einrichtung ist dabei auf ohne Gefährdung fahrbare, das heißt, nicht kollidierende Trajektorien, gerichtet. In einem konkreten Beispielsfall kann ein Wert für das Aufmerksamkeitsmaß dadurch ermittelt werden, dass der Sollwert der Verzögerung von dem Istwert der Verzögerung des Fahrzeugs subtrahiert und auf die Erdbeschleunigung normiert wird. Dieselbe Verfahrensweise kann aber auch auf Beschleunigungsänderungen angewandt werden. Mit Hilfe eines vorgebbaren Regelwerks wird aus dem Kollisionsgefährdungsmaß und dem Aufmerksamkeitsmaß in dem Funktionsmodul 26 eine Gefährdungsstufe für das eigene Fahrzeug 2 ermittelt. Wenn beispielsweise das Kollisionsgefährdungsmaß K größer ist als ein erster Wert 1 und das Aufmerksamkeitsmaß größer ist als ein Wert 2, dann ist eine Gefährdungsstufe A erreicht. Einer bestimmten Gefährdungsstufe sind vordefinierbare Gegenmassnahmen zugeordnet, die von den Funktionsmoduln 27, 28, 29, 30 ausgeführt werden. Als Reaktion auf die Feststellung der Gefährdungsstufe A ist in diesem zweiten Ausführungsbeispiel der Erfindung eine Warnung des Fahrers vor einer drohenden Kollision mit dem sich im Begegnungsverkehr nähernden Fahrzeug 3 vorgesehen. Eine derartige Warnung wird von dem Funktionsmodul 27 bewirkt.

Zur Warnung des Fahrers vor einer Vorfahrtverletzung und einer dadurch hervorgerufenen Kollisionsgefahr stehen dabei verschiedene Wahrnehmungskanäle zur Verfügung. Der Fahrer kann einerseits durch ein akustisches Signal wie beispielsweise einen Signalton oder durch eine künstliche Stimme gewarnt werden. Weiterhin kann er auch durch ein optisches Signal wie beispielsweise eine Warnlampe oder die Anzeige des kritischen Verkehrszeichens auf einem Display, insbesondere auch auf einem Head-up-Display, eine Warnung erhalten. Schließlich kann der Fahrer auch durch ein haptisches Signal wie beispielsweise ein Vibrieren der Fahrzeugpedale oder der Lenksäule gewarnt werden.

Abgesehen von der Warnung des Fahrers besteht die Möglichkeit, das Fahrzeug 2 frühzeitig auf eine drohende Notsituation vorzubereiten. So kann beispielsweise bei der Gefährdungsstufe B ein Bremsvorgang durch Anlegen der Bremsbacken (prefill) und/oder durch eine Modifikation von Schwellwerten eines Bremsassistenten vorbereitet werden. Zuständig dafür ist das Funktionsmodul 30.

Bei der Gefährdungsstufe C werden durch das Funktionsmodul 28 Auslöseschwellwerte von Rückhaltesystemen, wie Airbag und Gurtstraffer im Sinne einer größeren Empfindlichkeit modifiziert.

Bei der Gefährdungsstufe D erfolgt durch das Funktionsmodul 27 ein Eingriff in die Motorsteuerung, um das Antriebsmoment des Motors zu reduzieren.

Bei der Gefährdungsstufe E wird über das Funktionsmodul 30 in die Bremssteuerung eingegriffen und zunächst eine Warnbremsung ausgelöst, um die Reaktionsbereitschaft des Fahrers auf einen Bremsvorgang zu konzentrieren. Als positiver Nebeneffekt wird dem Fahrzeug dabei schon ein Teil seiner Bewegungsenergie entzogen.

Bei der Gefährdungsstufe F werden unter Einschaltung des Funktionsmoduls 28 reversible Rückhaltesysteme wie beispielsweise Gurtstraffer ausgelöst.

Schließlich werden bei der Gefährdungsstufe G Maßnahmen ergriffen, die die Fahrzeugbewegung selbst massiv beeinflussen. Wenn ein Fahrer beispielsweise die Geschwindigkeit trotz hoher Kollisionsgefahr nicht reduziert, wird durch Mitwirkung der Funktionsmodule 29 und 30 das Fahrzeug stark abgebremst oder sogar zum Stillstand gebracht.

Es liegt im Rahmen der Erfindung, auch vereinfachte Ausführungsbeispiele vorzusehen. So kann beispielsweise eine geringere Anzahl von Gefährdungsstufen definiert werden. Auch können Art und Anzahl der Reaktionen auf eine Gefährdungsstufe verringert werden. Beispielsweise kann sich die Reaktion lediglich auf eine Warnung des Fahrers, auf vorbereitende Maßnahmen oder einen unmittelbaren Eingriff oder eine beliebige Kombination davon beschränken.

## Patentansprüche

1. Verfahren zur Verhinderung der Kollision von Fahrzeugen, bei dem einerseits die Umgebung eines Fahrzeugs und andererseits Bewegungsgrößen des Fahrzeugs mittels Sensoren erfasst werden, **dadurch gekennzeichnet, dass** aus den Ausgangssignalen der Sensoren (2.1, 2.2, 2.3, 2.4, 2.5) ein Vorfahrtmissachtungsmaß (V) und ein Kollisionsgefährdungsmaß (K) abgeleitet werden, dass aus einer Kombination von Vorfahrtmissachtungsmaß und Kollisionsgefährdungsmaß eine Gefährdungsstufe (A, B, C, D, E, F, G) ermittelt wird, und dass in Abhängigkeit von der jeweils ermittelten Gefährdungsstufe (A, B, C, D, E, F, G) vorbestimmbare Schritte zur Verringerung der Kollisionsgefahr eingeleitet werden, wobei Vorfahrtmissachtungsmaß (V) und Kollisionsgefährdungsmaß (K) risikoabhängig gestaffelt werden, derart, dass sich bei Kombination von Vorfahrtrnissachtungsrnaß (V) und Kollisionsgefährdungsmaß (K) eine risikoabhängige Stufung der Gefährdungsstufe (A, B, C, D, E, F, G) ergibt

2. Verfahren nach Anspruch 1, **dadurch gekennzeichnet, dass** die vorbestimmbaren Schritte zur Verringerung der Kollisionsgefahr risikoabhängig gestaffelt sind.

3. Verfahren nach einem der Ansprüche 1 bis 2, **dadurch gekennzeichnet, dass** die Schritte zur Verringerung der Kollisionsgefahr eine Warnung des Fahrers, die Vorbereitung von Fahrzeugsystemen auf einen bevorstehenden Einsatz, aktive Eingriffe in das Lenksystem, das Bremssystem und das Motorsteuerungssystem, sowie die Aktivierung von Rückhaltesystemen umfassen.

4. Verfahren nach einem der Ansprüche 1 bis 3, **dadurch gekennzeichnet, dass** die Warnung des Fahrers durch optische, akustische und haptische Signale erfolgt.

5. Verfahren nach einem der Ansprüche 1 bis 4, **dadurch gekennzeichnet, dass** die haptischen Signale eine Vibration der Fahrzeugpedale und/oder der Lenksäule des Fahrzeugs (2) umfassen.

6. Verfahren nach einem der Ansprüche 1 bis 5, **dadurch gekennzeichnet, dass** die Umgebung des Fahrzeugs (2) und die Bewegungsgrößen des Fahrzeugs (2) mittels bordeigener Sensoren (2.1, 2.2, 2.3, 2.4, 2.5) erfasst werden.

7. Verfahren nach einem der Ansprüche 1 bis 6, **dadurch gekennzeichnet, dass** die Umgebung des Fahrzeugs (2) mittels mindestens eines Videosystems (2.1) erfasst wird.

8. Verfahren nach einem der Ansprüche 1 bis 7, **dadurch gekennzeichnet, dass** die Umgebung des Fahrzeugs (2) zusätzlich mit mindestens einem Radarsystem (2.2) erfasst wird.

9. Verfahren nach einem der Ansprüche 1 bis 8, **dadurch gekennzeichnet, dass** Bewegungsgrößen des Fahrzeugs (2) mit einer Mehrzahl von Sensoren, insbesondere mittels Raddrehzahlsensoren (2.3), Gierratensensoren (2.4) und Lenkwinkelsensoren (2.5) erfasst werden.

10. Verfahren nach einem der Ansprüche 1 bis 9, **dadurch gekennzeichnet, dass** das Vorfahrtsgefährdungsmaß (V) aus den mittels des mindestens einen Videosystems (2.1) erfassten Umgebungsdaten, wie Verlauf der Fahrspur, Verkehrszeichen, Ampelsituation und Bewegungsgrößen des eigenen Fahrzeugs (2), wie Fahrgeschwindigkeit, Fahrzeugbeschleunigung sowie aus dem erfassten Fahrerwunsch ermittelt wird.

11. Verfahren nach einem der Ansprüche 1 bis 10, **dadurch gekennzeichnet, dass** das Kollisionsgefährdungsmaß (K)aus den mittels des bordeigenen Videosystems (2.1) und/oder Radarsystems (2.2)gewonnenen Bewegungsgrößen der Querverkehr bildenden Fremdfahrzeuge (3,4) sowie aus den durch weitere Sensorsysteme wie Raddrehzahlsensor (2.3), Gierratensensor (2.4), Lenkwinkelsensor (2.5) gewonnenen Bewegungsgrößen des eigenen Fahrzeugs (2) abgeleitet wird.

12. Verfahren zur Verhinderung der Kollision von Fahrzeugen im Begegnungs- und Abbiegeverkehr, bei dem einerseits die Umgebung eines Fahrzeugs und andererseits Bewegungsgrößen des Fahrzeugs mittels Sensoren erfasst werden, **dadurch gekennzeichnet, dass** aus den Ausgangssignalen der Sensoren (2.1, 2.2, 2.3, 2.4, 2.5) ein Aufmerksamkeitsmaß (A) und ein Kollisionsgefährdungsmaß (K) abgeleitet werden, dass aus einer Kombination von Aufmerksamkeitsmaß (A) und Kollisionsgefährdungsmaß (K) eine Gefährdungsstufe (A, B, C, D, E, F, G) ermittelt wird, und dass in Abhängigkeit von der jeweils ermittelten Gefährdungsstufe (A, B, C, D, E, F, G) vorbestimmbare Schritte zur Verringerung der Kollisionsgefahr eingeleitet werden, wobei Aufmerksamkeitsmaß (A) und Kollisionsgefährdungsmaß (K) risikoabhängig gestaffelt werden, derart, dass sich bei Kombination von Aufmerksamkeitsmaß (A) und Kollisionsgefährdungsmaß (K) eine risikoabhängige Stufung der Gefährdungsstufe (A, B, C, D, E, F, G) ergibt.

13. Verfahren nach Anspruch 12, **dadurch gekennzeichnet, dass** die vorbestimmbaren Schritte zur Verringerung der Kollisionsgefahr risikoabhängig gestaffelt sind.

14. Verfahren nach einem der Ansprüche 12 bis 13, **dadurch gekennzeichnet, dass** die Schritte zur Verringerung der Kollisionsgefahr eine Warnung des Fahrers, die Vorbereitung von Fahrzeugsystemen auf einen bevorstehenden Einsatz, aktive Eingriffe in das Lenksystem, das Bremssystem und das Motorsteuerungssystem sowie die Aktivierung von Rückhaltesystemen umfassen.

15. Verfahren nach einem der Ansprüche 12 bis 14, **dadurch gekennzeichnet, dass** die Warnung des Fahrers durch optische, akustische und/oder haptische Signale erfolgt.

16. Verfahren nach einem der Ansprüche 12 bis 15, **dadurch gekennzeichnet, dass** die haptischen Signale eine Vibration der Fahrzeugpedale und/oder der Lenksäule des Fahrzeugs (2) umfassen.

17. Verfahren nach einem der Ansprüche 12 bis 16, **dadurch gekennzeichnet, dass** die Umgebung des Fahrzeugs (2) und die Bewegungsgrößen des Fahrzeugs (2) mittels bordeigener Sensoren (2.1, 2.2, 2.3, 2.4, 2.5) erfasst werden.

18. Verfahren nach einem der Ansprüche 12 bis 17, **dadurch gekennzeichnet, dass** die Umgebung des Fahrzeugs (2) mittels mindestens eines Videosystems (2.1) erfasst wird.

19. Verfahren nach einem der Ansprüche 12 bis 18, **dadurch gekennzeichnet, dass** die Umgebung des Fahrzeugs (2) zusätzlich mittels mindestens eines Radarsystems (2.2) erfasst wird.

20. Verfahren nach einem der Ansprüche 12 bis 19, **dadurch gekennzeichnet, dass** Bewegungsgrößen des Fahrzeugs (2) mit einer Mehrzahl von Sensoren, insbesondere mittels Raddrehzahlsensoren (2.3), Gierratensensoren (2.4) und Lenkwinkelsensoren (2.5) erfasst werden.

21. Verfahren nach einem der Ansprüche 12 bis 20, **dadurch gekennzeichnet, dass** das Aufmerksamkeitsmaß (A) aus den mittels des mindestens einen bordeigenen Videosystems (2.1) erfassten Umgebungsdaten, wie Verlauf der Fahrspur, Verkehrszeichen, aus Bewegungsgrößen des eigenen Fahrzeugs (2), wie Fahrgeschwindigkeit, Fahrzeugbeschleunigung, sowie aus Reaktionen des Fahrers, wie Betätigung des Fahr- oder Bremspedals ermittelt wird.

22. Verfahren nach einem der Ansprüche 12 bis 21, **dadurch gekennzeichnet, dass** das Kollisionsgefährdungsmaß (K)aus den mittels des bordeigenen Videosystems (2.1) und/oder Radarsystems (2.2)gewonnenen Bewegungsgrößen der den Begegnungsverkehr bildenden Fremdfahrzeuge (3,4) sowie aus den durch weitere Sensorsysteme wie Raddrehzahlsensor (2.3), Gierratensensor (2.4). Lenkwinkelsensor (2.5) gewonnenen Bewegungsgrößen des eigenen Fahrzeugs (2) abgeleitet wird.

23. Einrichtung zur Durchführung des Verfahrens nach einem der Ansprüche 1 bis 22, **dadurch gekennzeichnet, dass** die Einrichtung Sensoren zur Erfassung der Umgebung wie mindestens ein Videosystem (2.1) und gegebenenfalls zusätzlich mindestens ein Radarsystem (2.2) oder Lidarsystem sowie eine Mehrzahl von Sensoren zur Erfassung von Bewegungsgrößen eines Fahrzeugs (2) wie insbesondere einen Raddrehzahlsensor (2.3), einen Gierratensensor (2.4),einen Lenkwinkelsensor (2.5) umfasst, dass die Einrichtung weiter ein Funktionsmodul (20) zur Verarbeitung der Ausgangssignale der Sensoren (2.1, 2.2) sowie ein Funktionsmodul (22) zur Verarbeitung der Ausgangssignale der Sensoren (2.3, 2.4, 2.5) umfasst, dass die Einrichtung weiter ein Funktionsmodul (24) zur Ermittlung eines Vorfahrtverletzungsmaßes (V) aus den Ausgangssignalen der Funktionsmodule (21, 22) und ein Funktionsmodul (25) zur Vermittlung eines Kollisionsgefährdungsmaßes (K) aus den Ausgangssignalen der Funktionsmodule (22, 23) umfasst, dass die Einrichtung weiter ein Funktionsmodul (26) zur Verarbeitung der Ausgangssignale der Funktionsmodule (24, 25) umfasst, wobei aus einer Kombination von Vorfahrtverletzungsmaß (V) und Kolllsionsgefährdungsmaß (K) eine Gefährdungsstufe (A,B,C,D,E,F,G) bestimmt wird, und wobei die Einrichtung schließlich Funktionsmodule (27,28,29,30) umfasst, die von Ausgangssignalen des Funktionsmoduls (26) ansteuerbar sind, und die, in Abhängigkeit von der Art der Gefährdungsstufe (A,B,C,D,E,F,G), Steuersignale für die Steuerung von optischen, akustischen und haptischen Signaleinrichtungen, Rückhaltesystemen, die Motorsteuerung, die Bremseinrichtung und die Lenkanlage des Fahrzeugs (2) liefern, wobei Vorfahrtmissachtungsmaß (V) und Kollisionsgefährdungsmaß (K) risikoabhängig gestaffelt werden, derart, dass sich bei Kombination von Vorfahrtmissachtungsmaß (V) und Kollisionsgefährdungsmaß (K) eine risikoabhängige Stufung der Gefährdungsstufe (A, B, C, D, E, F, G) ergibt.

24. Einrichtung zur Durchführung des Verfahrens nach einem der Ansprüche 1 bis 22, **dadurch gekennzeichnet, dass** die Einrichtung Sensoren zur Erfassung der Umgebung wie mindestens ein Videosystem (2.1) und gegebenenfalls zusätzlich mindestens ein Radarsystem (2.2) oder Lidarsystem, sowie eine Mehrzahl von Sensoren zur Erfassung von Bewegungsgrößen eines Fahrzeugs (2) wie insbesondere einen . Raddrehzahlsensor (2.3), einen Gierratensensor (2.4),einen Lenkwinkelsensor (2.5) umfasst, dass die Einrichtung weiter ein Funktionsmodul (20) zur Verarbeitung der Ausgangssignale der Sensoren (2.1, 2.2) sowie ein Funktionsmodul (22) zur Verarbeitung der Ausgangssignale der Sensoren (2.3, 2.4, 2.5) umfasst, dass die Einrichtung weiter ein Funktionsmodul (44) zur Ermittlung eines Aufmerksamkeitsmaßes (A) aus den Ausgangssignalen der Funktionsmodule (21, 22) und ein Funktionsmodul (25) zur Ermittlung eines Kollisionsgefährdungsmaßes (K) aus den Ausgangssignalen der Funktionsmodule (22, 23) umfasst, dass die Einrichtung weiter ein Funktionsmodul (26) zur Verarbeitung der Ausgangssignale der Funktionsmodule (24, 25) umfasst, wobei aus einer Kombination von Aufmerksamkeitsmaß (A) und Kollisionsgefährdungsmaß (K) eine Gefährdungsstufe (A,B,C,D,E,F,G) bestimmt wird, und wobei die Einrichtung schließlich Funktionsmodule (27,28,29,30) umfasst, die von Ausgangssignalen des Funktionsmoduls (26) ansteuerbar sind, und die, in Abhängigkeit von der Art der Gefährdungsstufe (A,B,C,D,E,F,G), Steuersignale für die Steuerung von optischen, akustischen und/oder haptischen Signaleinrichtungen, Rückhaltesystemen, die Motorsteuerung, die Bremseinrichtung und die Lenkanlage des Fahrzeugs (2) liefern, wobei Aufmerksamkeitsmaß (A) und Kollisionsgefährdungsmaß (K) risikoabhängig gestaffelt werden, derart, dass sich bei Kombination von Aufmerksamkeitsmaß (A) und Kollisionsgefährdungsmaß (K) eine risikoabhängige Stufung der Gefährdungsstufe (A, B, C, D, E, F, G) ergibt..

25. Einrichtung nach einem der Ansprüche 23, 24, **dadurch gekennzeichnet, dass** das Videosystem (2.1), das Radarsystem (2.2), sowie die weiteren Sensoren (2.3, 2.4, 2.5) fahrzeugfest in dem Fahrzeug (2) angeordnet sind, so dass das Fahrzeug (2) sowohl eigene Bewegungsgrößen als auch Messdaten aus seiner Umgebung autonom erfassen kann.

## Claims

1. Method for preventing vehicles from colliding, in which, on the one hand, the surroundings of a vehicle and, on the other hand, movement variables of the vehicle are sensed by means of sensors, **characterized in that** a priority infringement measure (V) and a collision hazard measure (K) are derived from the output signals of the sensors (2.1, 2.2, 2.3, 2.4, 2.5), **in that** a hazard level (A, B, C, D, E, F, G) is determined from a combination of a priority infringement measure and collision hazard measure and **in that** predeterminable steps for reducing the risk of collision are initiated as a function of the respectively determined hazard level (A, B, C, D, E, F, G), the priority infringement measure (V) and collision hazard measure (K) being staggered as a function of risk in such a way that when a priority infringement measure (V) and a collision hazard measure (K) are combined, risk-dependent grading of the hazard level (A, B, C, D, E, F, G) occurs.

2. Method according to Claim 1, **characterized in that** the predeterminable steps for reducing the risk of collision are staggered as a function of risk.

3. Method according to one of Claims 1 to 2, **characterized in that** the steps for reducing the risk of collision comprise warning the driver, preparing vehicle systems for imminent use, active interventions into the steering system, the brake system and the engine control system, and the activation of restraint systems.

4. Method according to one of Claims 1 to 3, **characterized in that** the driver is warned by means of visual, acoustic and haptic signals.

5. Method according to one of Claims 1 to 4, **characterized in that** the haptic signals comprise vibration of the vehicle pedals and/or the steering column of the vehicle (2).

6. Method according to one of Claims 1 to 5, **characterized in that** the surroundings of the vehicle (2) and the movement variables of the vehicle (2) are sensed by means of on-board sensors (2.1, 2.2, 2.3, 2.4, 2.5).

7. Method according to one of Claims 1 to 6, **characterized in that** the surroundings of the vehicle (2) are sensed by means of at least one video system (2.1).

8. Method according to one of Claims 1 to 7, **characterized in that** the surroundings of the vehicle (2) are additionally sensed using at least one radar system (2.2).

9. Method according to one of Claims 1 to 8, **characterized in that** movement variables of the vehicle (2) are sensed using a plurality of sensors, in particular by means of wheel speed sensors (2.3), yaw rate sensors (2.4) and steering angle sensors (2.5).

10. Method according to one of Claims 1 to 9, **characterized in that** the priority hazard measure (V) is determined from the data on the surroundings, such as profile of the lane, road signs, traffic light situation and movement variables of the driver's own vehicle (2) such as the velocity, acceleration of the vehicle, sensed by means of the at least one video system (2.1), as well as from the sensed driver's intention.

11. Method according to one of Claims 1 to 10, **characterized in that** the collision hazard measure (K) is derived from the movement variables, acquired by means of the on-board video system (2.1) and/or radar system (2.2), of the other vehicles (3, 4) which form cross traffic and from the movement variables of the driver's own vehicle (2) which are derived by means of further sensor systems such as a wheel speed sensor (2.3), yaw rate sensor (2.4), steering angle sensor (2.5).

12. Method for preventing vehicles from colliding in oncoming traffic and turning-off traffic, in which, on the one hand, the surroundings of a vehicle and, on the other hand, movement variables of the vehicle are sensed by means of sensors, **characterized in that** an attention measure (A) and a collision hazard measure (K) are derived from the output signals of the sensors (2.1, 2.2, 2.3, 2.4, 2.5), **in that** a hazard level (A, B, C, D, E, F, G) is derived from a combination of the attention measure (A) and collision hazard measure (K), and **in that** predeterminable steps for reducing the risk of collision are initiated as a function of the respectively determined hazard level (A, B, C, D, E, F, G), the attention measure (A) and collision hazard measure (K) being staggered as a function of risk in such a way that, given a combination of attention measure (A) and collision hazard measure (K), risk-dependent grading of the hazard level (A, B, C, D, E, F, G) occurs.

13. Method according to Claim 12, **characterized in that** the predeterminable steps for reducing the risk of collision are staggered as a function of risk.

14. Method according to one of Claims 12 to 13, **characterized in that** the steps for reducing the risk of collision comprise warning the driver, preparing vehicle systems for imminent use, active interventions into the steering system, the brake system and the engine control system, and activating restraint systems.

15. Method according to one of Claims 12 to 14, **characterized in that** the driver is warned by means of visual, acoustic and haptic signals.

16. Method according to one of Claims 12 to 15, **characterized in that** the haptic signals comprise vibration of the vehicle pedals and/or the steering column of the vehicle (2).

17. Method according to one of Claims 12 to 16, **characterized in that** the surroundings of the vehicle (2) and the movement variables of the vehicle (2) are sensed by means of on-board sensors (2.1, 2.2, 2.3, 2.4, 2.5).

18. Method according to one of Claims 12 to 17, **characterized in that** the surroundings of the vehicle (2) are sensed by means of at least one video system (2.1).

19. Method according to one of Claims 12 to 18, **characterized in that** the surroundings of the vehicle (2) are additionally sensed using at least one radar system (2.2).

20. Method according to one of Claims 12 to 19, **characterized in that** movement variables of the vehicle (2) are sensed using a plurality of sensors, in particular by means of wheel speed sensors (2.3), yaw rate sensors (2.4) and steering angle sensors (2.5).

21. Method according to one of Claims 12 to 20, **characterized in that** the attention measure (A) is determined from the data on the surroundings, such as the profile of the lane, road signs, from movement variables of the driver's own vehicle (2) such as the velocity, acceleration of the vehicle, which are sensed by means of the at least one on-board video system (2.1), as well as from the reactions from the driver such as activation of the accelerator pedal or brake pedal.

22. Method according to one of Claims 12 to 21, **characterized in that** the collision hazard measure (K) is derived from the movement variables, acquired by means of the on-board video system (2.1) and/or radar system (2.2), of the other vehicles (3, 4) which form the oncoming traffic, as well as from the movement variables of the driver's own vehicle (2) which are acquired by means of further sensor systems such as a wheel speed sensor (2.3), yaw rate sensor (2.4), steering angle sensor (2.5).

23. Device for carrying out the method according to one of Claims 1 to 22, **characterized in that** the device comprises sensors for sensing the surroundings, such as at least one video system (2.1) and, if appropriate, additionally at least one radar system (2.2) or lidar system, as well as a plurality of sensors for sensing movement variables of a vehicle (2) such as, in particular, a wheel speed sensor (2.3), a yaw rate sensor (2.4), a steering angle sensor (2.5), **in that** the device also comprises a function module (20) for processing the output signals of the sensors (2.1, 2.2) as well as a function module (22) for processing the output signals of the sensors (2.3, 2.4, 2.5), **in that** the device also comprises a function module (24) for determining a priority infringement measure (V) from the output signals of the function modules (21, 22) and a function module (25) for determining a collision hazard measure (K) from the output signals of the function modules (22, 23), **in that** the device also comprises a function module (26) for processing the output signals of the function modules (24, 25), a hazard level (A, B, C, D, E, F, G) being determined from a combination of priority infringement measurement (V) and collision hazard measure (K), and the device finally comprising function modules (27, 28, 29, 30) which can be actuated by output signals of the function module (26), and which supply, as a function of the type of hazard level (A, B, C, D, E, F, G), control signals for controlling optical, acoustic and haptic signal devices, restraint systems, the engine controller, the brake device and the steering system of the vehicle (2), the priority infringement measure (V) and collision hazard measure (K) being staggered as a function of risk in such a way that when a priority infringement measure (V) and a collision hazard measure (K) are combined, risk-dependent grading of the hazard level (A, B, C, D, E, F, G) occurs.

24. Device for carrying out the method according to one of Claims 1 to 22, **characterized in that** the device comprises systems for sensing the surroundings, such as at least one video system (2.1) and, if appropriate, additionally at least one radar system (2.2) or lidar system, as well as a plurality of sensors for sensing movement variables of a vehicle (2) such as, in particular, a wheel speed sensor (2.3), a yaw rate sensor (2.4), a steering angle sensor (2.5), **in that** the device also comprises a function module (20) for processing the output signals of the sensors (2.1, 2.2) as well as a function module (22) for processing the output signals of the sensors (2.3, 2.4, 2.5), **in that** the device also comprises a function module (44) for determining an attention measure (A) from the output signals of the function modules (21, 22) and a function module (25) for determining a collision hazard measure (K) from the output signals of the function modules (22, 23), **in that** the device also comprises a function module (26) for processing the output signals of the function modules (24, 25), a hazard level (A, B, C, D, E, F, G) being determined from a combination of attention measure (A) and collision hazard measure (K), and the device finally comprising function modules (27, 28, 29, 30) which can be actuated by output signals of the function module (26), and which supply, as a function of the type of hazard level (A, B, C, D, E, F, G), control signals for controlling optical, acoustic and haptic signal devices, restraint systems, the engine controller, the brake device and the steering system of the vehicle (2), the attention measure (A) and collision hazard measure (K) being staggered as a function of risk in such a way that, given a combination of attention measure (A) and collision hazard measure (K), risk-dependent grading of the hazard level (A, B, C, D, E, F, G) occurs.

25. Device according to one of Claims 23, 24, **characterized in that** the video system (2.1), the radar system (2.2) and the further sensors (2.3, 2.4, 2.5) are arranged fixedly in the vehicle (2) so that the vehicle (2) can sense both its own movement variables and measurement data from its surroundings in an autonomous fashion.

## Revendications

1. Procédé pour empêcher la collision de véhicules, avec lequel des capteurs détectent d'une part l'environnement d'un véhicule et d'autre part des grandeurs de déplacement du véhicule, **caractérisé en ce qu'**un indice de négligence de la marche avant (V) et un indice de risque de collision (K) sont dérivés des signaux de sortie des capteurs (2.1, 2.2, 2.3, 2.4, 2.5), **en ce qu'**un degré de danger (A, B, C, D, E, F, G) est déterminé à partir d'une combinaison de l'indice de négligence de la marche avant et de l'indice de risque de collision, et **en ce que** des actions pouvant être prédéfinies en vue de réduire le risque de collision sont engagées en fonction du degré de danger (A, B, C, D, E, F, G) à chaque fois déterminé, l'indice de négligence de la marche avant (V) et l'indice de risque de collision (K) étant échelonnés en fonction du risque de manière à obtenir une classification en fonction du risque du degré de danger (A, B, C, D, E, F, G) en combinant l'indice de négligence de la marche avant (V) et l'indice de risque de collision (K).

2. Procédé selon la revendication 1, **caractérisé en ce que** les actions pouvant être prédéfinies en vue de réduire le risque de collision sont échelonnées en fonction du risque.

3. Procédé selon l'une des revendications 1 à 2, **caractérisé en ce que** les actions en vue de réduire le risque de collision comprennent un avertissement au conducteur, la préparation de systèmes du véhicule à une utilisation à venir, des interventions actives dans le système de direction, le système de freinage et le système de commande du moteur ainsi que l'activation de systèmes de retenue.

4. Procédé selon l'une des revendications 1 à 3, **caractérisé en ce que** l'avertissement au conducteur s'effectue par des signaux visuels, sonores et tactiles.

5. Procédé selon l'une des revendications 1 à 4, **caractérisé en ce que** les signaux tactiles comprennent une vibration de la pédale du véhicule et/ou de la colonne de direction du véhicule (2).

6. Procédé selon l'une des revendications 1 à 5, **caractérisé en ce que** l'environnement du véhicule (2) et les grandeurs de déplacement du véhicule (2) sont détectés au moyen de capteurs embarqués (2.1, 2.2, 2.3, 2.4, 2.5).

7. Procédé selon l'une des revendications 1 à 6, **caractérisé en ce que** l'environnement du véhicule (2) est détecté au moyen d'au moins un système vidéo (2.1).

8. Procédé selon l'une des revendications 1 à 7, **caractérisé en ce que** l'environnement du véhicule (2) est en plus détecté avec au moins un système radar (2.2).

9. Procédé selon l'une des revendications 1 à 8, **caractérisé en ce que** les grandeurs de déplacement du véhicule (2) sont détectées avec une pluralité de capteurs, notamment au moyen de capteurs de vitesse de rotation des roues (2.3), de capteurs de taux de lacet (2.4) et de capteurs d'angle de direction (2.5).

10. Procédé selon l'une des revendications 1 à 9, **caractérisé en ce que** l'indice de négligence de la marche avant (V) est déterminé à partir des données d'environnement acquises au moyen de l'au moins un système vidéo (2.1), comme le tracé de la voie de circulation, les panneaux de signalisation, l'état des feux de signalisation ainsi que les grandeurs de déplacement du véhicule propre (2), comme la vitesse de déplacement, l'accélération du véhicule ainsi que du souhait détecté du conducteur.

11. Procédé selon l'une des revendications 1 à 10, **caractérisé en ce que** l'indice de risque de collision (K) est déterminé à partir des grandeurs de déplacement des véhicules externes (3, 4) formant le trafic transversal, acquises au moyen du système vidéo (2.1) et/ou du système radar (2.2) embarqués, ainsi qu'à partir des grandeurs de déplacement du véhicule propre (2) acquises par les autres systèmes de détection tels que le capteur de vitesse de rotation des roues (2.3), le capteur de taux de lacet (2.4), le capteur d'angle de direction (2.5).

12. Procédé pour empêcher la collision de véhicules dans le trafic convergeant et le trafic changeant de direction, avec lequel des capteurs détectent d'une part l'environnement d'un véhicule et d'autre part des grandeurs de déplacement du véhicule, **caractérisé en ce qu'**un indice d'attention (A) et un indice de risque de collision (K) sont dérivés des signaux de sortie des capteurs (2.1, 2.2, 2.3, 2.4, 2.5), **en ce qu'**un degré de danger (A, B, C, D, E, F, G) est déterminé à partir d'une combinaison de l'indice d'attention (A) et de l'indice de risque de collision (K), et **en ce que** des actions pouvant être prédéfinies en vue de réduire le risque de collision sont engagées en fonction du degré de danger (A, B, C, D, E, F, G) à chaque fois déterminé, l'indice d'attention (A) et l'indice de risque de collision (K) étant échelonnés en fonction du risque de manière à obtenir une classification en fonction du risque du degré de danger (A, B, C, D, E, F, G) en combinant l'indice d'attention (A) et l'indice de risque de collision (K).

13. Procédé selon la revendication 12, **caractérisé en ce que** les actions pouvant être prédéfinies en vue de réduire le risque de collision sont échelonnées en fonction du risque.

14. Procédé selon l'une des revendications 12 à 13, **caractérisé en ce que** les actions en vue de réduire le risque de collision comprennent un avertissement au conducteur, la préparation de systèmes du véhicule à une utilisation à venir, des interventions actives dans le système de direction, le système de freinage et le système de commande du moteur ainsi que l'activation de systèmes de retenue.

15. Procédé selon l'une des revendications 12 à 14, **caractérisé en ce que** l'avertissement au conducteur s'effectue par des signaux visuels, sonores et/ou tactiles.

16. Procédé selon l'une des revendications 12 à 15, **caractérisé en ce que** les signaux tactiles comprennent une vibration de la pédale du véhicule et/ou de la colonne de direction du véhicule (2).

17. Procédé selon l'une des revendications 12 à 16, **caractérisé en ce que** l'environnement du véhicule (2) et les grandeurs de déplacement du véhicule (2) sont détectés au moyen de capteurs embarqués (2.1, 2.2, 2.3, 2.4, 2.5).

18. Procédé selon l'une des revendications 12 à 17, **caractérisé en ce que** l'environnement du véhicule (2) est détecté au moyen d'au moins un système vidéo (2.1).

19. Procédé selon l'une des revendications 12 à 18, **caractérisé en ce que** l'environnement du véhicule (2) est en plus détecté avec au moins un système radar (2.2).

20. Procédé selon l'une des revendications 12 à 19, **caractérisé en ce que** les grandeurs de déplacement du véhicule (2) sont détectées avec une pluralité de capteurs, notamment au moyen de capteurs de vitesse de rotation des roues (2.3), de capteurs de taux de lacet (2.4) et de capteurs d'angle de direction (2.5).

21. Procédé selon l'une des revendications 12 à 20, **caractérisé en ce que** l'indice d'attention (A) est déterminé à partir des données d'environnement acquises au moyen de l'au moins un système vidéo (2.1) embarqué, comme le tracé de la voie de circulation, les panneaux de signalisation ainsi que les grandeurs de déplacement du véhicule propre (2), comme la vitesse de déplacement, l'accélération du véhicule ainsi que des réactions du conducteur comme l'actionnement de la pédale d'accélération ou de frein.

22. Procédé selon l'une des revendications 12 à 21, **caractérisé en ce que** l'indice de risque de collision (K) est déterminé à partir des grandeurs de déplacement des véhicules externes (3, 4) formant le trafic convergeant, acquises au moyen du système vidéo (2.1) et/ou du système radar (2.2) embarqués, ainsi qu'à partir des grandeurs de déplacement du véhicule propre (2) acquises par les autres systèmes de détection tels que le capteur de vitesse de rotation des roues (2.3), le capteur de taux de lacet (2.4), le capteur d'angle de direction (2.5).

23. Dispositif pour mettre en oeuvre le procédé selon l'une des revendications 1 à 22, **caractérisé en ce que** le dispositif comprend des capteurs de détection de l'environnement, comme au moins un système vidéo (2.1) et éventuellement en plus au moins un système radar (2.2) ou un système lidar ainsi qu'une pluralité de capteurs pour détecter des grandeurs de déplacement d'un véhicule (2), comme notamment un capteur de vitesse de rotation des roues (2.3), un capteur de taux de lacet (2.4) et un capteur d'angle de direction (2.5), **en ce que** le dispositif comprend en plus un module fonctionnel (20) pour traiter les signaux de sortie des capteurs (2.1, 2.2) ainsi qu'un module fonctionnel (22) pour traiter les signaux de sortie des capteurs (2.3, 2.4, 2.5), **en ce que** le dispositif comprend en plus un module fonctionnel (24) pour déterminer un indice de négligence de la marche avant (V) à partir des signaux de sortie des modules fonctionnels (21, 22) et un module fonctionnel (25) pour déterminer un indice de risque de collision (K) à partir des signaux de sortie des modules fonctionnels (22, 23), **en ce que** le dispositif comprend en plus un module fonctionnel (26) pour traiter les signaux de sortie des modules fonctionnels (24, 25), un degré de danger (A, B, C, D, E, F, G) étant déterminé à partir d'une combinaison de l'indice de négligence de la marche avant (V) et de l'indice de risque de collision (K), et le dispositif comprenant finalement des modules fonctionnels (27, 28, 29, 30) qui peuvent être commandés par les signaux de sortie du module fonctionnel (26) et qui délivrent, en fonction de la nature du degré de danger (A, B, C, D, E, F, G), des signaux de commande pour commander des dispositifs de signalisation sonore, visuelle et tactile, des systèmes de retenue, la commande du moteur, le dispositif de freinage et la direction du véhicule (2), l'indice de négligence de la marche avant (V) et l'indice de risque de collision (K) étant échelonnés en fonction du risque de manière à obtenir une classification en fonction du risque du degré de danger (A, B, C, D, E, F, G) en combinant l'indice de négligence de la marche avant (V) et l'indice de risque de collision (K).

24. Dispositif pour mettre en oeuvre le procédé selon l'une des revendications 1 à 22, **caractérisé en ce que** le dispositif comprend des capteurs de détection de l'environnement, comme au moins un système vidéo (2.1) et éventuellement en plus au moins un système radar (2.2) ou un système lidar ainsi qu'une pluralité de capteurs pour détecter des grandeurs de déplacement d'un véhicule (2), comme notamment un capteur de vitesse de rotation des roues (2.3), un capteur de taux de lacet (2.4) et un capteur d'angle de direction (2.5), **en ce que** le dispositif comprend en plus un module fonctionnel (20) pour traiter les signaux de sortie des capteurs (2.1, 2.2) ainsi qu'un module fonctionnel (22) pour traiter les signaux de sortie des capteurs (2.3, 2.4, 2.5), **en ce que** le dispositif comprend en plus un module fonctionnel (24) pour déterminer un indice d'attention (A) à partir des signaux de sortie des modules fonctionnels (21, 22) et un module fonctionnel (25) pour déterminer un indice de risque de collision (K) à partir des signaux de sortie des modules fonctionnels (22, 23), **en ce que** le dispositif comprend en plus un module fonctionnel (26) pour traiter les signaux de sortie des modules fonctionnels (24, 25), un degré de danger (A, B, C, D, E, F, G) étant déterminé à partir d'une combinaison de l'indice d'attention (A) et de l'indice de risque de collision (K), et le dispositif comprenant finalement des modules fonctionnels (27, 28, 29, 30) qui peuvent être commandés par les signaux de sortie du module fonctionnel (26) et qui délivrent, en fonction de la nature du degré de danger (A, B, C, D, E, F, G), des signaux de commande pour commander des dispositifs de signalisation sonore, visuelle et/ou tactile, des systèmes de retenue, la commande du moteur, le dispositif de freinage et la direction du véhicule (2), l'indice d'attention (A) et l'indice de risque de collision (K) étant échelonnés en fonction du risque de manière à obtenir une classification en fonction du risque du degré de danger (A, B, C, D, E, F, G) en combinant l'indice d'attention (A) et l'indice de risque de collision (K).

25. Dispositif selon l'une des revendications 23, 24, **caractérisé en ce que** le système vidéo (2.1), le système radar (2.2) ainsi que les autres capteurs (2.3, 2.4, 2.5) sont montés à demeure dans le véhicule (2) de sorte que le véhicule (2) puisse détecter en toute autonomie à la fois ses propres grandeurs de déplacement et les données de mesure de son environnement.
